Europäisches Patentamt

European Patent Office

Office européen des brevets

(11) Publication number: **0 468 058 A1**

# EUROPEAN PATENT APPLICATION
## published in accordance with Art. 158(3) EPC

(21) Application number: 91903820.8

(22) Date of filing: **13.02.91**

(86) International application number:
**PCT/JP91/00171**

(87) International publication number:
**WO 91/12460 (22.08.91 91/19)**

(51) Int. Cl.5: **F16L 55/10**, F16L 55/16,
F16L 41/08

(30) Priority: **15.02.90 JP 32367/90**
**22.11.90 JP 121842/90 U**

(43) Date of publication of application:
**29.01.92 Bulletin 92/05**

(84) Designated Contracting States:
**AT BE CH DE DK ES FR GB IT LI LU NL SE**

(71) Applicant: **TOA GROUT KOGYO KABUSHIKI KAISHA**
**7-11, Kiba 3-chome, Kotou-ku**
**Tokyo(JP)**

Applicant: **Kabushiki Kaisha Iseki Kaihatsu Koki**
**31-6, Yoyogi 4-chome**
**Shibuya-ku Tokyo(JP)**

(72) Inventor: **OOKA, Sinkiti**
**1-15-23, Horinouchi**
**Suginami-ku, Tokyo 166(JP)**
Inventor: **SUZUKI, Yukio**
**5-27-22-208, Kyodo**
**Setagaya-ku, Tokyo 156(JP)**
Inventor: **KITAJIMA, Hisashi**
**9-4-1-409, Kameido**
**Kotou-ku, Tokyo 136(JP)**
Inventor: **NODA, Hidehiro**
**8-29-9, Ooshima**
**Kotou-ku, Tokyo 136(JP)**

(74) Representative: **Low, Peter John et al**
**WILSON, GUNN & ELLIS 41-51 Royal**
**Exchange Cross Street**
**Manchester, M2 7DB(GB)**

(54) **METHOD OF WATER STOPPING IN PIPELINE, CONSTRUCTION OF CONNECTING PORTION OF PIPELINE AND WATER STOP MATERIAL.**

(57) Water stop material includes water-impermeable water stop material (10, 70) having an expandable hose portion (18, 72) and a flange portion (20, 74) integrally connected to one end of the hose portion. The water stop material is disposed in first and second pipelines in such a manner that the flange portion is positioned in the first pipeline (12) and the hose portion is positioned in the second pipeline (14), and is maintained, for example, by means of a base (24, 54, 82) radially and flaringly wound therearound, in such a manner that the flange portion is in a liquid-tight contact with the inner surface of the first pipeline and the hose portion extends across the second.

# F I G . 5

TECHNICAL FIELD

This invention relates to a method for cutting off water for a portion connecting a first pipeline to a second pipeline branched off from the first pipeline, a structure of the connection portion for cutting off water, and a cut-off material.

BACKGROUND ART

A portion connecting a first pipeline such as a main pipe of sewerage to a second pipeline such as a branch pipe is, in general, bonded to each other by means of a bonding agent such as mortar in liquid tightness. In general, the bonding agent is peeled off from the first pipeline or the second pipeline only by slightly displacing the first pipeline and the second pipeline relatively to each other. As a result, a space is formed in the connection portion, and the liquid tightness of the connection portion is lowered. When the liquid tightness of the connection portion is lowered, a cut-off treatment of water for preventing water leakage from the space formed in the connection portion is performed.

This kind of cut-off treatment of water is, in general, practiced by a so-called chemicals feeding method of injecting a cut-off agent of cement type or liquid type into the space and around the connection portion and coagulating the cut-off agent.

In this method, however, when the water leakage practically happens, the cut-off agent is diluted, flown away and often not hardened. The subsequent treatment for removing the cut-off agent flown into the pipeline should be done.

Further, in the chemicals feeding method using a cement-type cut-off agent, the cut-off agent after being hardened does not any elasticity, so that when the pipe is displaced due to vibration, land subsidence or the like, the hardened cut-off agent is peeled off from the pipeline and cracks are formed in the hardened cut-off agent. Therefore, any long-term stable cut-off effect of water is not expected.

Furthermore, in the chemicals feeding method using a liquid-type cut-off agent, the mechanical strength of the cut-off agent is weak, and the cut-off effect of water is not maintained stable for a long period of time.

DISCLOSURE OF THE INVENTION

An object of the present invention is to provide a cut-off method of pipeline for being able to perform the cut-off treatment of a connection portion without using any cut-off agent, a structure of the connection portion in the pipeline and a cut-off material.

According to the present invention, a method for cutting off water from a portion connecting a first pipeline to a second pipeline branched off from the first pipeline comprises the steps of disposing an impermeable cut-off member having an expandable hose portion and a flange portion formed integrally with one end of the hose portion in the first and second pipelines so that the flange portion is positioned within the first pipeline and that the hose portion is positioned within the second pipeline, and then maintaining the cut-off member so that the flange portion is brought into contact with the inner surface of the first pipeline in liquid tightness and that the hose portion extends within the second pipeline.

A structure of a portion connecting a first pipeline to a second pipeline branched off from the first pipeline according to the present invention comprises an impermeable cut-off member having an expandable hose portion and a flange portion formed integrally with one end of the hose portion. The flange portion is brought into contact with the inner surface of the first pipeline in liquid tightness and the hose portion is disposed so as to extend within the second pipeline.

A cut-off material used for cutting off water from a portion connecting a first pipeline to a second pipeline branched off from the first pipeline according to the present invention comprises an impermeable cut-off member provided with an expandable hose portion and a flange portion formed integrally with one end of the hose portion.

The cut-off member is disposed from the inside of the first pipeline or from the side of the upper end of the second pipeline so that the flange portion is positioned within the first pipeline and the hose portion extends within the second pipeline. The liquid tightness between the flange portion and the first pipeline is maintained by the flange portion brought into contact with the inner surface of the first pipeline in liquid tightness. On the contrary, the liquid tightness between the hose portion and the second pipeline is maintained by the hose portion extending higher than a groundwater level within the second pipeline.

From this reason, according to the present invention, the water leakage from the connection portion in the pipeline is prevented without using any cut-off agent for closing the space formed in the connection portion.

As means for maintaining the cut-off member in the condition that the flange portion is brought into contact with the inner surface of the first pipeline in liquid tightness, use may be made of a sheet-like base cylindrically wound so as to be expandable in the radial direction. In this case, the base is disposed within the first pipeline and subsequently expanded in the radial direction. Accordingly, the flange portion is pressed by the base against the inner surface of the first pipeline. After then, the base is maintained in the radially expanded condition by engaging a plurality of engaging portions provided on the base with each other, and as a result, the flange portion is put on the inner surface of the first pipeline in liquid tightness.

As the maintaining means, use may be made of means including the sheet-like base and an elastically deformable sleeve. In this case, the base is disposed within the first pipeline, together with the sheet in the condition that the base is disposed within the sleeve in the expandably cylindrically wound condition, and subsequently, the base is expanded in the radial direction. In this manner, the flange portion is pressed by the base and the sleeve against the inner surface of the first pipeline. After then, the base is maintained in the radially expanded condition by engaging a plurality of engaging portions provided on the base with each other, and as a result, the flange portion is put on the inner surface of the first pipeline in liquid tightness.

In case of using either of the maintaining means, it is preferable that a recess, which receives therein the sleeve and the base so as not to protrude the sleeve and the base from the inner surface of the first pipeline, on the inner surface of the first pipeline, before disposing the cut-off material.

In the cut-off material according to the present invention, it is preferable that the flange portion has a plurality of projections formed on at least one of the surface at the side of the hose portion and the surface opposite to the above-mentioned surface. In this way, the projections are mainly deformed elastically when the sheet-like base cylindrically wound so as to be expandable in the radial direction is expanded in the radial direction within the first pipeline and the flange portion is pressed by the base against the inner surface of the first pipeline.

In case the projections are formed on the surface opposite to the surface at the side of the hose portion, the liquid tightness between the inner surface of the first pipeline and the flange portion is maintained by pressing the flange portion against the inner surface of the first pipeline to be maintained in the elastically deformed condition.

On the contrary, in case the projections are formed on the surface at the side of the hose portion, the liquid tightness between the inner surface of the first pipeline and the flange portion is maintained in liquid tightness by pressing the projections against the inner surface of the first pipeline to be maintained in the elastically deformed condition.

In either of the cases, the space between the second pipeline and the hose portion is maintained in liquid tightness by extending the hose portion higher than a ground water level.

It is preferable that the projections are annular projections continuously extending around the axis of the hose portion. Since the contact portions between the flange portion and the inner surface of the first pipeline extend continuously around the axis of the hose portion in this way, the liquid tightness between the flange portion and the inner surface of the first pipeline is maintained more firmly.

The cut-off material may, further, comprise a sheet-like base disposed within the first pipeline in the cylindrically wound condition so as to be expandable in the radical direction and for maintaining the flange portion in the pressed condition against the inner surface of the first pipeline. In this case, the base member has engaging portions engaged with each other to maintain the base in the radially expanded condition when the base expanded.

Instead of this, the cut-off material may, further, comprise an elastically deformable sleeve disposed within the first pipeline, and a sheet-like base disposed within the sleeve in the cylindrically wound condition so as to be expandable in the radial direction and for maintaining the flange portion in the pressed condition against the inner surface of the first pipeline through the sleeve. In this case, the base has engaging portions engaged with each other to maintain the base in the radially expanded condition when the base is expanded.

The hose portion may comprise an expandable base material and resin impregnated by the base material and hardened by heat or light, and the flange portion may be provided with a main portion formed by expanding the end of the hose portion in the radial direction and an elastically deformable auxiliary member mounted on the main portion at the side of the hose portion. In this case, the projections are formed integrally with the auxiliary member.

BRIEF DESCRIPTION OF THE DRAWINGS

Fig. 1 is a cross-sectional view showing an embodiment of a cut-off member according to the present invention;
Fig. 2 is a cross-sectional view of a pipeline placing the cut-off member shown in Fig. 1;
Fig. 3 is a perspective view developing and showing an embodiment of a base used together with the cut-off member shown in Fig. 1;
Fig. 4 is a perspective view showing the cylindrically wound condition of the base shown in Fig. 3;
Fig. 5 is a cross-sectional view showing the pipeline installed with the cut-off member of Fig.

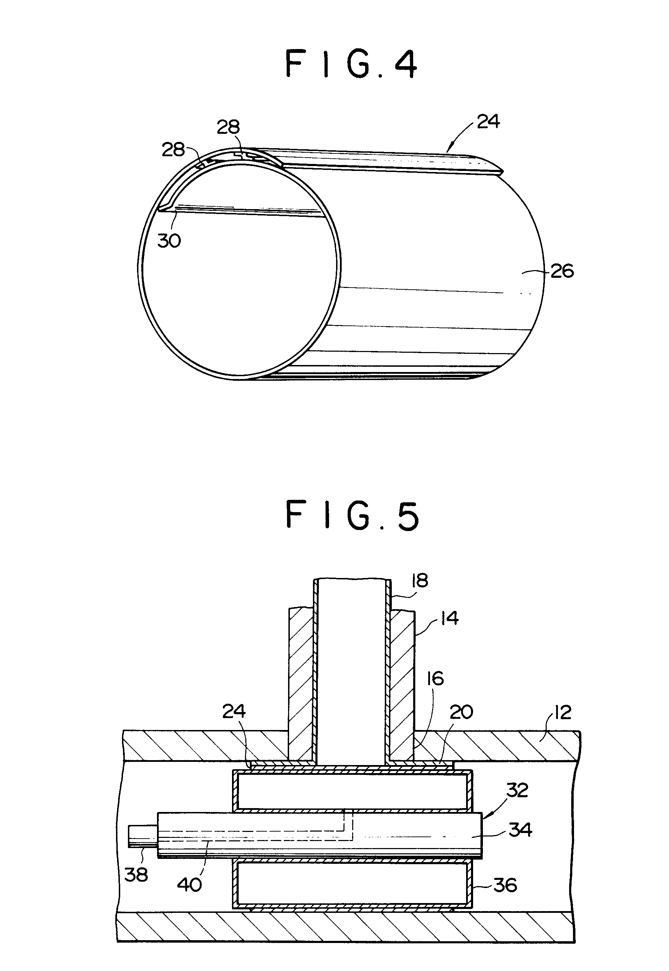

1 and the base of Fig. 4 together with an expanding machine for the base;

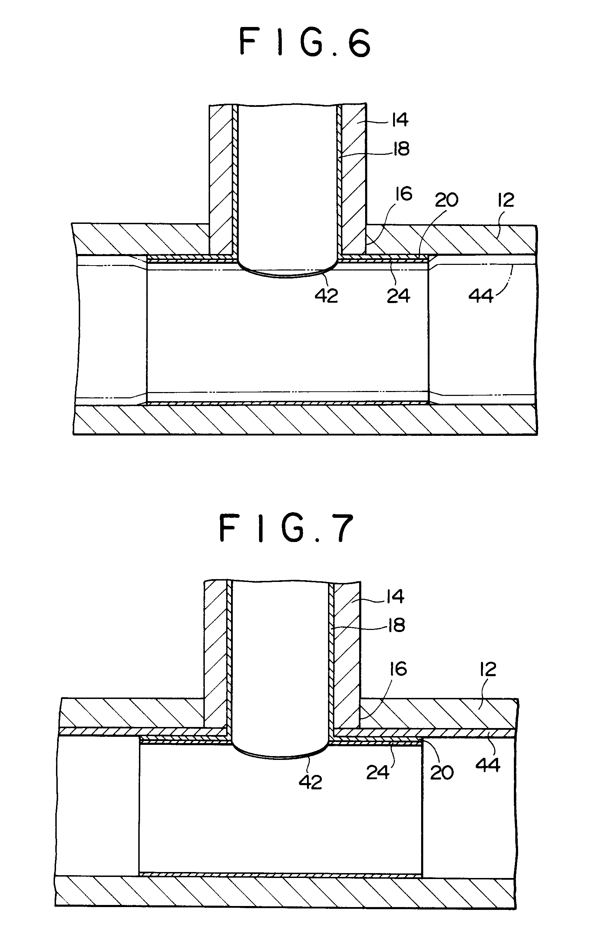

Fig. 6 is a cross-sectional view showing the condition of a hole formed in the base mounted on the pipeline;

Fig. 7 is a cross-sectional view showing an embodiment of a repair pipe portion formed in the pipeline;

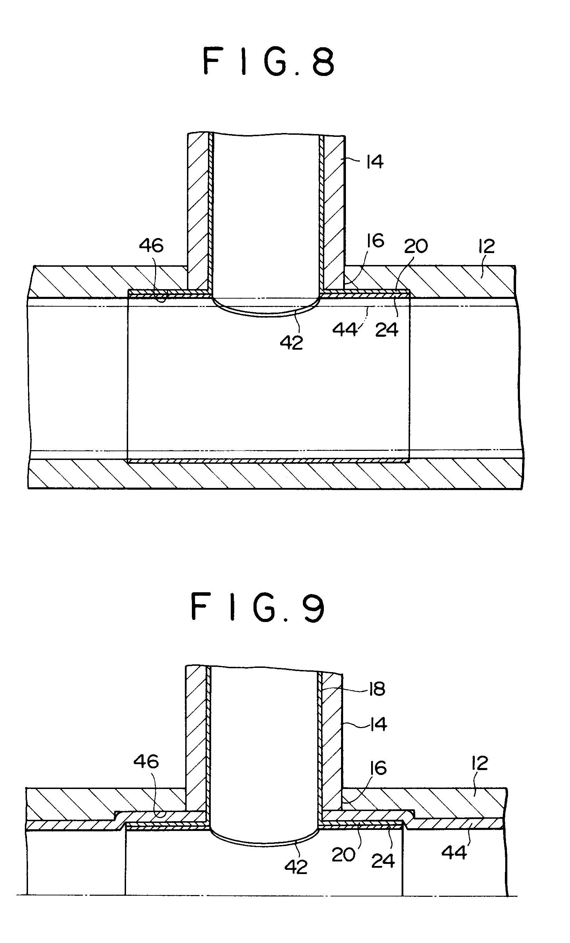

Fig. 8 is a cross-sectional view showing an embodiment of a cut-off structure in case of forming a recess in the first pipeline;

Fig. 9 is a cross-sectional view showing another embodiment of the cut-off structure in case of forming a recess in the first pipeline;

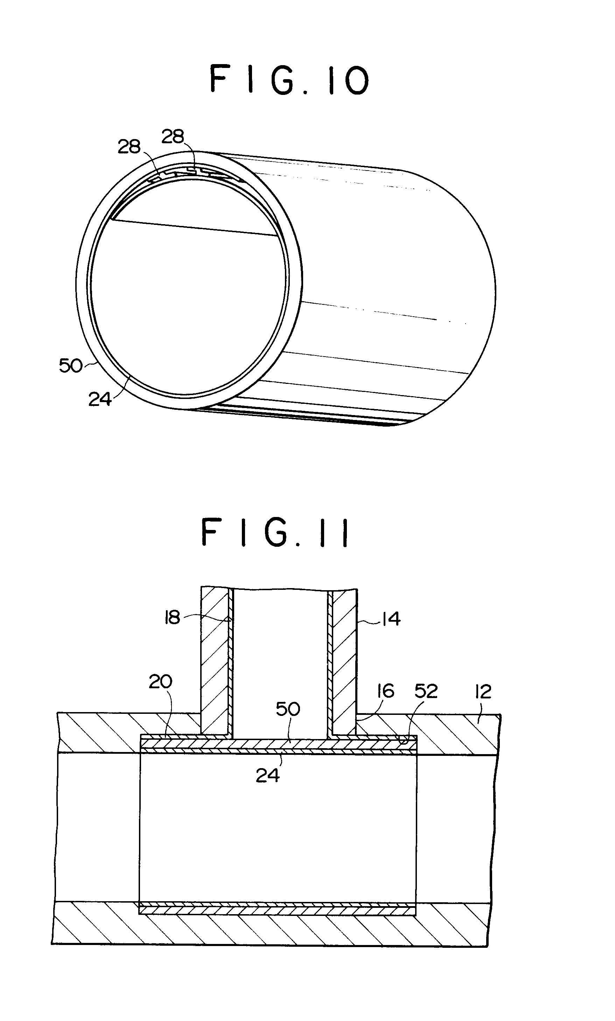

Fig. 10 is a perspective view showing a base and a sleeve;

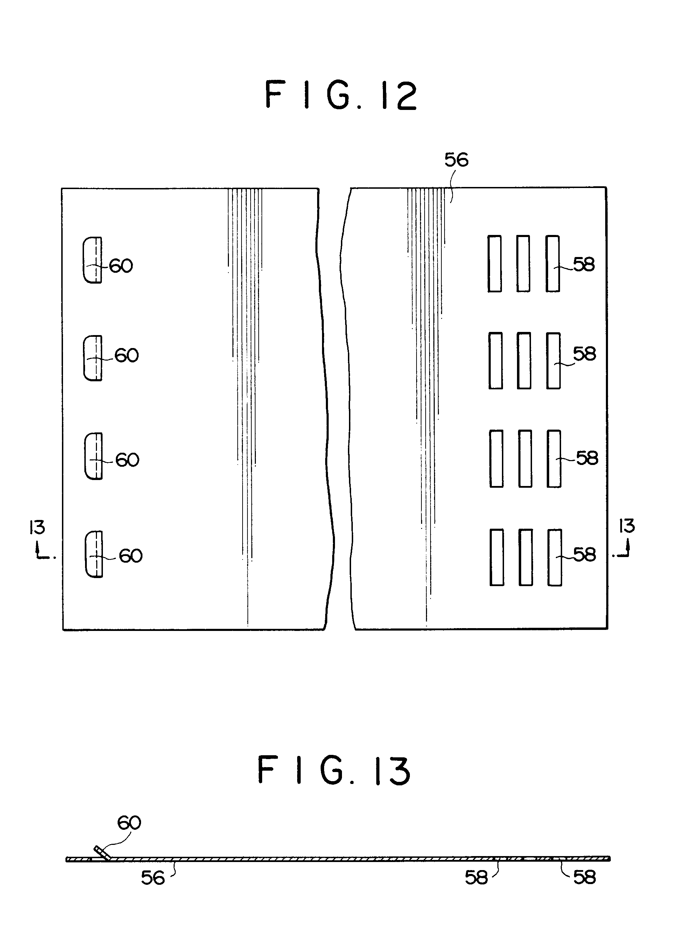

Fig. 11 is a cross-sectional view of the pipeline installed with the base and the sleeve shown in Fig. 10;

Fig. 12 is an extended view showing another embodiment of the base;

Fig. 13 is a cross-sectional view taken along line 13-13 in Fig. 12;

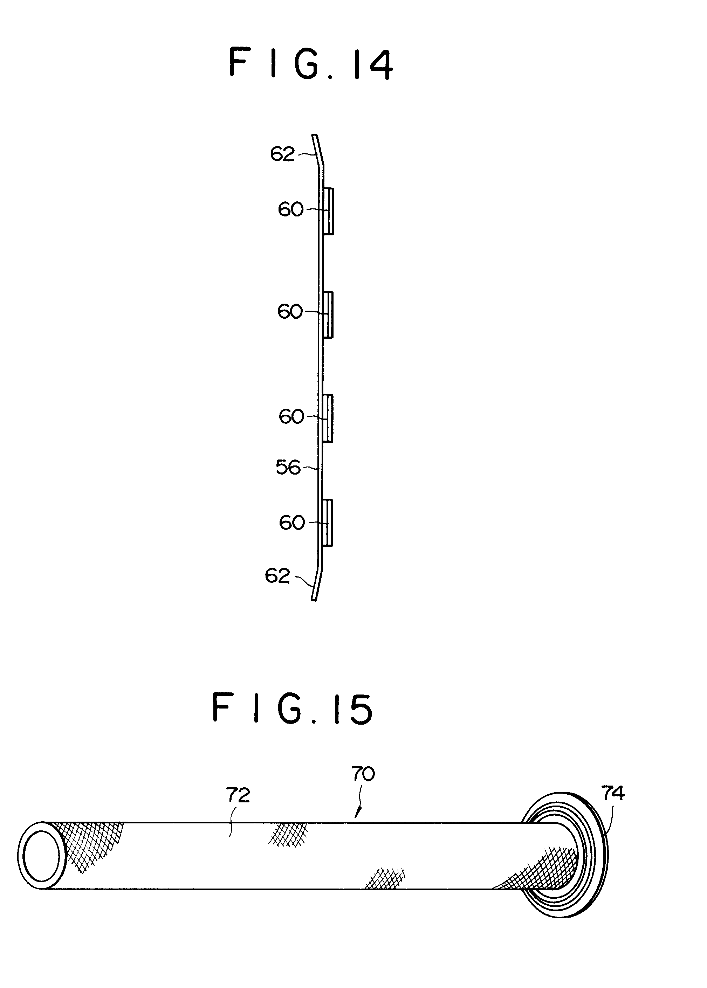

Fig. 14 is a left side view of the base shown in Fig. 12;

Fig. 15 is a perspective view showing another embodiment of the cut-off member according to the present invention;

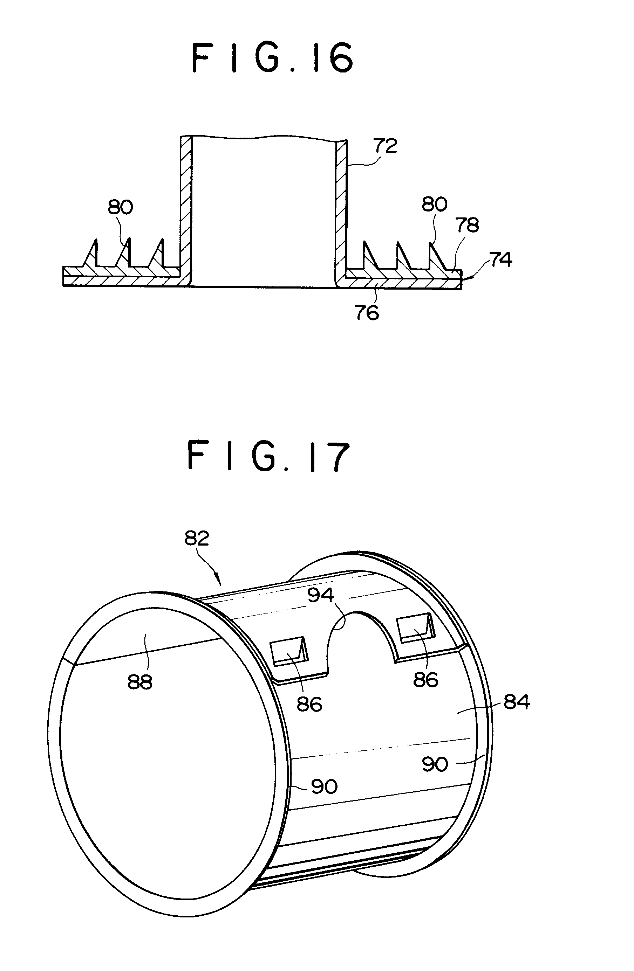

Fig. 16 is an enlarged cross-sectional view showing the neighbourhood of a flange portion of the cut-off member shown in Fig. 15;

Fig. 17 is a perspective view showing a further embodiment of the base;

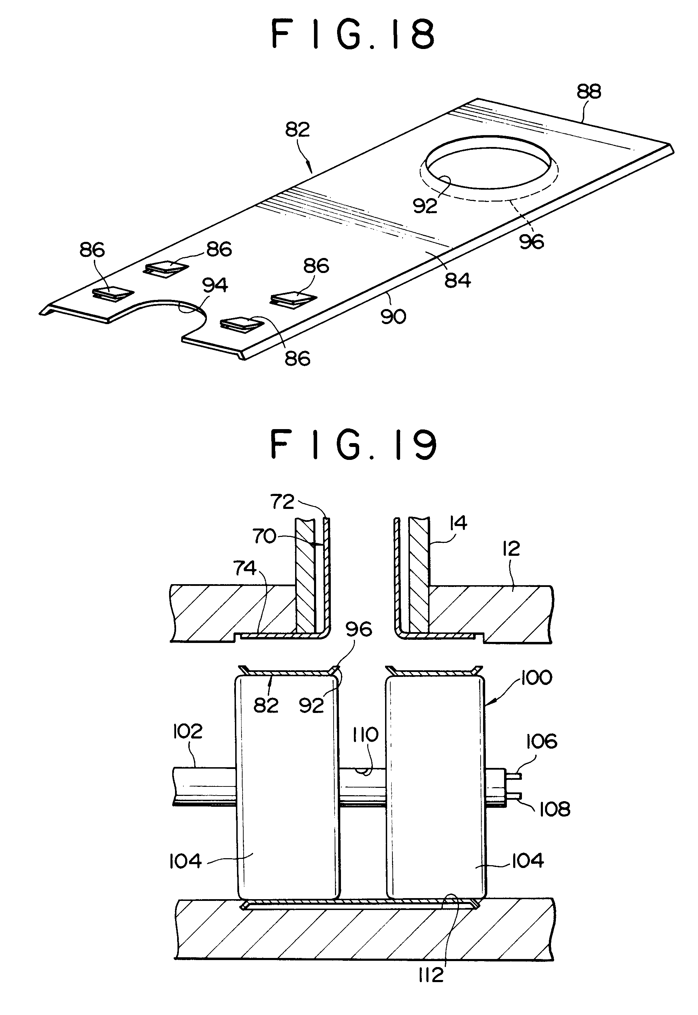

Fig. 18 is a perspective view showing the extended condition of the base shown in Fig. 17;

Fig. 19 is a cross-sectional view showing the condition of the base of Fig. 17 transferred into the pipeline together with the expanding machine;

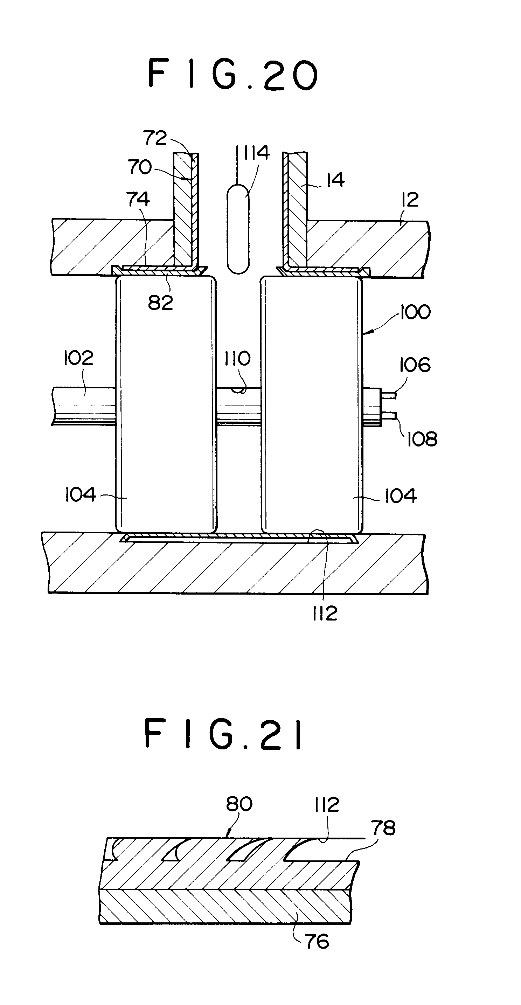

Fig. 20 is a cross-sectional view showing the condition of the base expanded in the radial direction within the pipeline; and

Fig. 21 is a cross-sectional view showing the condition of a deformed projection of the cut-off member shown in Fig. 15.

## BEST MODE FOR EXECUTING THE INVENTION

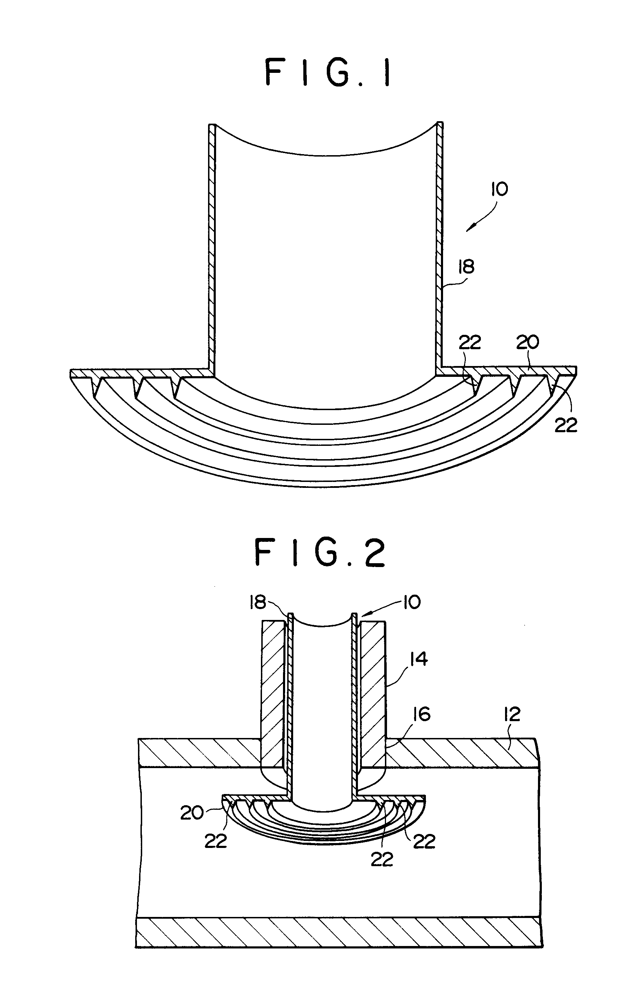

A cut-off member 10 shown in Figs. 1 and 2 is used for the prevention of water leakage from a portion 16 connecting a first pipeline 12 embedded in the ground to a second pipeline 14 branched off from the first pipeline. In the illustrated embodiment, the first pipeline 12 and the second pipeline 14 are respectively a main pipe and a branch pipe laid in the ground. The first pipeline 12 may, however, be a pipeline composed of the main pipe already installed and a coating pipe formed at the inside of the main pipe, i.e., a repair pipe portion.

The cut-off member 10 has an expandable hose portion 18 and an elastically deformable flange portion 20 formed integrally with one end of the hose portion. The hose portion 18 has the outer diameter approximately equal to the inner diameter of the second pipeline 14 where the hose portion should be placed. Further, the hose portion 18 has its length longer than that of the second pipeline 14, and is made of either thermosetting or photohardening synthetic resin.

However, the hose portion 18 may be what an expandable base material formed by fabrics, knittings, sponge-like raw materials or the like into a hose-like form is impregnated with either thermosetting or photohardening synthetic resin.

The flange portion 20 has the outer diameter larger than that of the second pipeline 14 and further has the thickness slightly larger than the thickness dimension of the hose portion 18. The flange portion 20 has a plurality of projections 22 extending continuously around the axis of the hose portion 18 and formed on the surface opposite to the surface at the side of the hose portion 18.

The thickness of both of the hose portion 18 and the flange portion 20 may be approximately equal to each other as shown in the illustrated embodiment or different from each other. In particular, it is preferable that the thickness of the hose portion 18 is made smaller than that of the flange portion 20.

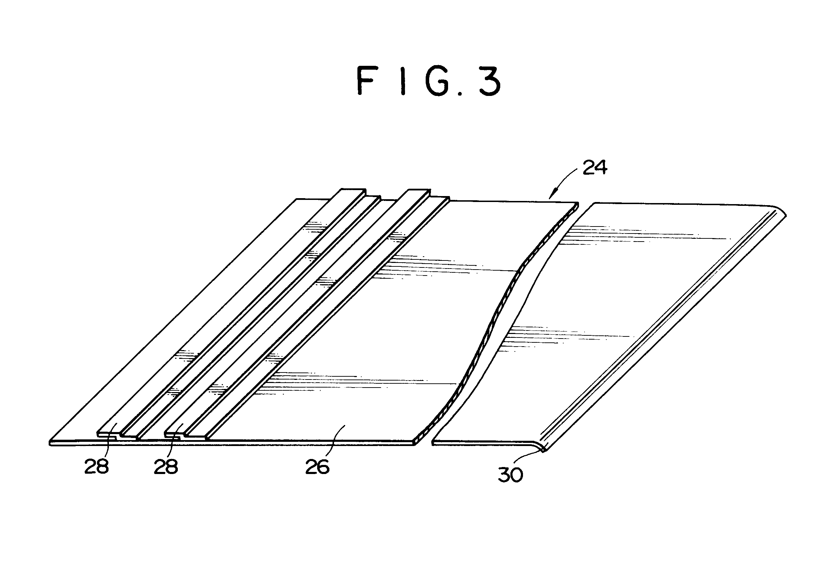

Furthermore, a sheet-like base 24 shown in Fig. 3 is used for the prevention of water leakage from the connection portion 16. The base 24 has an elastically deformable sheet portion 26, a plurality of female engaging portions 28 formed at one end of the sheet portion, and a male engaging portion 30 formed at the other end of the sheet portion 26 and capable of engaging with the female engaging portions 28.

In the illustrated embodiment, the female engaging portions 28 are composed of elongate metal fittings having a Z-letter cross-sectional shape and fixed to the sheet portion 26, and the male engaging portion 30 is the other end of the sheet portion 26 and bent toward the surface opposite to the surface provided with the female engaging portions 28.

The thickness of the hose portion 18, the thickness of the flange portion 20, the height of the projection 22, and the thickness of the base 24 are defined as 0.2 to 5 mm, 1 to 6 mm, 4 to 8 mm and 0.5 to 3 mm, for example, respectively.

It is preferable that the cut-off member 10 is made of a polymeric material such as synthetic resin and rubber. On the contrary, it is preferable that the base 24 is made of a metal material such as stainless steel, copper, and copper alloy with corrosion resistance or a synthetic material such as vinyl chloride.

As shown in Fig. 4, the base 24 is preliminarily wound into a spiral form or a cylindrical form so that the end at the side of the female engaging portions 28 of the sheet portion 26 is disposed outside the end at the side of the male engaging portion 30.

At the time of a cut-off treatment of water, first of all, the first pipeline 12 and the inside of the second pipeline 14 are cleaned.

Then, the cut-off member 10 is inserted into the second pipeline 14 from the inside of the first pipeline 12 or from the side of the upper end of the second pipeline 14, so that the flange portion 20 is positioned within the first pipeline 12 and the hose portion 18 extends within the second pipeline 14.

The cut-off member 10 can be placed from the inside of the first pipeline 12 by inserting the cut-off member 10 into the second pipeline 14 until a part of the hose portion 18 protrudes upwards from the second pipeline 14 by using fluid such as compressed air, for example, under the condition that the other end of the hose portion 18 is closed.

The cut-off member 10 may be also placed by folding the flange portion 20, for example, in such a size as the flange portion permits to pass through the inside of the second pipeline 14, by pushing the flange portion 20 in the folded state into the second pipeline 14 from the side of its upper end by means of more than one elastically deformable rod-like member, and by releasing the folding of the flange portion 20 when the flange portion 20 reaches the inside of the first pipeline 12.

Subsequently, the cut-off member 10 is drawn to the side of the upper end of the second pipeline 14, so that the flange portion 20 is engaged with the inner surface of the first pipeline 12.

Then, as shown in Fig. 5, the base 24 is placed at the connection portion within the first pipeline 12 together with an expanding machine 32 for expanding the base in the radial direction. The expanding machine 32 is provided with a shaft portion 34, an expansion portion 36 fixed to the shaft portion so as to extend continuously around the shaft portion and also expanded like a floating ring by pressure fluid such as compressed air, and a nipple 38 for the pressure fluid. As for such an expanding machine 32, use may be made of a water-sealing machine under the trade name of "PACKER" manufactured by Toa Grout Kogyo Kabushiki Kaisha, which is one of the applicants for the patent in the present invention. Fig. 5 shows the condition that the expansion portion 36 is expanded to expand the base 24 in the radial direction.

The expanding machine 32 is placed within the base 24 in the condition that the expansion portion 36 is shrunken. Subsequently, the expanding machine 32 is moved to a predetermined position within the first pipeline 12 together with the base 24 in the condition that the expansion portion 36 is expanded, to such a degree that the base 24 does not displace against the expanding machine 32, by means of the pressure fluid supplied from a fluid source installed on the ground into the nipple 38 through a hose. A flow path 40 communicating with both the expansion portion 36 and the nipple 38 is formed in the shaft portion 34 of the expanding machine 32.

For instance, in case the first pipeline 12 is in such a size as any operator is not able to enter it, the base 24 and the expanding machine 32 are moved to a predetermined position within the first pipeline 12 by passing a rope through between the one end and the other end of the first pipeline 12, by connecting the rope to the expanding machine 32 at the side of the other end of the first pipeline 12, and by moving the rope to the side of the one end of the first pipeline 12 by a determined distance. In this case, it is preferable that the base 24 and the expanding machine 32 are moved by installing a television camera to the expanding machine 32 and by monitoring a picture image through the television camera.

When the base 24 and the expanding machine 32 are moved to the predetermined position, the pressure fluid is supplied to the nipple 38 of the expanding machine 32, so that the expansion portion 36 is expanded. By this expansion, the base 24 is expanded in the radial direction to such a degree as both ends of the sheet portion 26 slightly overlap with each other, that is, to such a degree as the male engaging portion 30 is engaged with either of the female engaging portions 28. As a result, the flange portion 20 of the cut-off member 10 is pressed by the sheet portion 26 against the inner surface of the first pipeline 12, and the projections 22 of the flange portion 20 are elastically deformed.

Then, after the pressure fluid within the expansion portion 36 is removed, the expanding machine 32 is removed. By this, the base 24 is shrunken by restoring force of the projection 22 until the male engaging portion 30 is engaged with either of the female engaging portions 28. Thus, the flange portion 20 is maintained to be pressed by the base 24 against the inner surface of the first pipeline 12, the space between the inner surface of the first pipeline 12 and the flange portion 20 is maintained in liquid tightness, and the space between the flange portion 20 and the base 24 is maintained in air tightness.

Subsequently, the hose portion 18 of the cut-off member 10 is expanded, then extended along the inner surface of the second pipeline 14, and hardened by heated air or light in the extended condition. The hose portion 18 is expanded, for example, by feeding the compressed air from the side of the other end, since the opening of the end of the hose portion 18 at the side of the first pipeline 12 is closed by the base 24.

Then, as shown in Fig. 6, a predetermined portion of the base 24 is bored by a known boring machine in order to make the second pipeline 14 opened within the first pipeline 12. By this, a hole 42 is formed in the sheet portion 26 of the base 24 and permits the communication between the first pipeline 12 and the second pipeline 14.

In order to place the cut-off member as mentioned above, for instance, a form memory alloy or a form memory resin which memorizes the form of the portion disposing the flange portion 20, in particular, the form of the inner surface of the first pipeline 14 is placed at the flange portion 20, and the form memory alloy or the form memory resin is returned to its original form after the flange portion 20 is disposed within the first pipeline 12.

The flange portion 20 and the hose portion 18 may be bonded to the inner surfaces of the first and second pipelines 12 and 14 with an adhesive or the like, respectively. In this case, the flange portion 20 and the hose portion 18 are bonded to the first and second pipelines 12 and 14, respectively, for example, by coating the outer surfaces of the hose portion 18 and the flange portion 20 with a thermally fusible adhesive or by impregnating both of the hose portion 18 and the flange portion 20 with the same kind of adhesive, and then, by fusing the adhesive while feeding the heated air as the compressed air. Any adhesives other than the thermally fusible adhesive are also used as the adhesive.

When a cylindrical coating layer, that is, a repair pipe portion 44, is formed at the inside of the first pipeline 12, the repair pipe portion 44 may be placed so as to hold the flange portion 18 and the base 24 between the first pipeline 12 and the repair pipe portion 44, as shown in Fig. 6. In this case, a hole for making the second pipeline 14 opened within the first pipeline 12 is also formed in the repair pipe portion 44. The hole in the repair pipe portion 44 and the hole 42 in the base 24 may be formed at the same time.

However, as shown in Fig. 7, it is preferable that the repair pipe portion 44 is formed within the first pipeline 12 and the hole for making the second pipeline 14 opened within the first pipeline 12 is formed in the repair pipe portion 44, before placing the cut-off member 10 and the base 24. Since the portion defining the hole of the repair pipe portion 44 is put between the first pipeline 12 and the flange portion 18 in this manner, the portion is prevented from peeling off from the inner surface of the first pipeline 12.

As shown in Fig. 8, it is preferable that a recess 46 for receiving the flange portion 20 and the base 24 is formed on the inner surface of the first pipeline 12, before placing the cut-off member 10 and the base 24. In this manner, the flange portion 20 and the base 24 are prevented from protruding from the inner surface of the first pipeline 12.

In case the recess 46 is formed in the pipeline 12, the repair pipe portion 44 may be formed within the first pipeline 12 after placing the cut-off member 10 and the base 24 as shown in Fig. 8 or before placing the cut-off member 10 and the base 24 as shown in Fig. 9.

Each projection 22 of the cut-off member 10 is not necessary to be in a circular form and may be a number of the projections in the conic form or the like, so long as the base 24 is deformed elastically to give a form for engaging the female engaging portion 28 of the base 24 with the male engaging portion 30 of the base 24 when the base 24 is expanded. Instead of forming the projections in the cut-off member 10, the thickness dimension of the flange portion 20 may be also enlarged.

Instead of forming the projections in the cut-off member 10, a sleeve 50 shown in Fig. 10 may be used. The sleeve 50 shown in Fig. 10 is made of an elastically deformable material like rubber, and has the outer diameter smaller than the inner diameter of the first pipeline 12.

When the sleeve 50 is used, the base 24 is placed within the sleeve 50 in the cylindrically wound condition so as to be expandable in the radial direction as shown in Fig. 10. In this condition, the base 24 and the sleeve 50 are placed in the expanding machine 32 shown in Fig. 5, and moved to the predetermined position within the first pipeline together with the expanding machine 32. Thus, the base 24 and the sleeve 50 are expanded in the radial direction by expanding the expansion portion 36 of the expanding machine 32.

In this manner, the sleeve 50 is elastically deformed to press the flange portion 20 of the cut-off member 10 against the inner surface of the first pipeline 12 as shown in Fig. 11. When the expansion portion 36 of the expanding machine 32 is shrunken, the sleeve 50 causes the base 24 to shrink slightly so that the male engaging portion of the base 24 is engaged with either of the female engaging portions.

After then, the expanding machine 32 is removed, and a hole is bored in the base 24 and the sleeve 50 so as to make the second pipeline 14 opened to the first pipeline 12. In case of using the sleeve 50, it is preferable that the recess 52 for receiving the flange portion 20, the sleeve 50 and the base 24 is formed on the inner surface of the first pipeline 12.

As for the female engaging portion of the base 24, use is made of a hole formed in the sheet portion 26, a deformed tongue piece of the portion struck out by striking a portion of the sheet portion 26 through one surface side into the other surface side, and other different engaging portions. The male engaging portion may be other engaging portion like a projection.

Each female engaging portion 58 of the base 54 shown in Figs. 12 to 14 is composed of one of a plurality of holes formed in a matrix form at one end of the sheet portion 56, and each male engaging portion 60 is composed of one of a plurality of tongue pieces struck out by striking the other end of the sheet portion 56 through one side into the other side. Both rim portions 62 of the sheet portion 56 in the width direction are bent at the opposite side of the male engaging portions 60.

The base 54 is used in the cylindrically wound condition so as to be expandable in the radial direction so that the male engaging portion 60 is placed at the inside of the female engaging portion 58. Both rim portions 62 prevent both ends of the sheet portion 56 from displacing relatively in the width direction of the sheet portion 56, when the base 54 is expanded in the radial direction.

The projection formed in the flange portion of the cut-off member may be formed on the surface at the side of the hose portion or on both surfaces of the flange portion. An embodiment of the cut-off member formed on the surface at the side of the hose portion is shown in Figs. 15 and 16.

A cut-off member 70 shown in Figs. 15 and 16 has an expandable hose portion 72 and an elastically deformable flange portion 74 formed integrally with one end of the hose portion. The flange portion 74 is provided with a main portion 76 expanding the end of the hose portion 72 in the radial direction and an auxiliary member 78 installed at the side of the hose portion 72 in the main portion 76.

The hose portion 72 and the main portion 76 are manufactured by impregnating an expandable base material formed of fabrics, knittings, sponge-like raw materials or the like into a hose-like form with resin having the property that hardens itself by heat, light or the like, in particular, ultraviolet light. The auxiliary member 78 is made of an elastically deformable plate material as rubber, and has a plurality of projections 80 extending continuously around the axis of the hose portion 72 and formed on the surface at the side of the hose portion 72.

The hole for permitting the communication between the first and second pipelines may be formed in the base before maintaining the flange portion of the cut-off member to be brought into contact with the inner surface of the first pipeline in liquid tightness. An embodiment of such a base is shown in Figs. 17 and 18.

The base 82 shown in Figs. 17 and 18 has an elastically deformable sheet portion 84, a plurality of female engaging portions 86 formed at one end of the sheet portion 84, a male engaging portion 88 formed at the other end of the sheet portion 84 and capable of being engaged with the female engaging portion 86 and a rim portion, that is, a bent portion 90 continuously extending along both rim portions in the width direction of the sheet portion 84 across over the entire longitudinal direction of the sheet portion 84.

In the sheet portion 84, a circular hole 92 is formed at the side of the male engaging portion 88 and a semicircular notch 94 is formed at the side of the female engaging portion. The hole 92 and the notch 94 have a radius of curvature approximately equal to one half of the inner diameter of the second pipeline 14. A portion 96 defining the hole 92 is bent in the same direction as the bent portion 90.

In the illustrated embodiment, the female engaging portion 86 is a tongue piece struck out by striking a portion of the sheet portion 84 into the opposite side of the bent portion 90, and the male engaging portion 88 is the other end of the sheet portion 84.

As shown in Fig. 17, the base 82 is wound in a spiral form preliminarily having the diameter smaller than the inner diameter of the first pipeline 12, that is, in a cylindrical form, so that the end at the side of the female engaging portion 86 of the sheet portion 84 is placed at the outside of the end at the side of the male engaging portion 88. In the condition that the base 82 is wound in a cylindrical form, the bent portion 90 is directed outward in the radial direction.

The base 82 has the inner diameter approximately equal to that of the first pipeline 12 in the condition that the female engaging portion 86 is engaged with the male engaging portion 88. The length of the base 82 in the axial direction is slightly larger than the diameter of the flange portion in the cut-off member.

In case of doing a cut-off process using the base 82, as shown in Fig. 19, the base 82 is placed at the connection portion within the first pipe 12 together with an expanding machine 100 for expanding the base 82 in the radial direction. In Figs. 19 and 20, there are shown an embodiment using the cut-off member 70 in Figs. 15 and 16.

The expanding machine 100 is provided with a shaft portion 102, a pair of expansion portions 104 fixed to the shaft portion so as to extend continuously around the shaft portion 102 and expanded like a floating ring by pressure fluid such as compressed air and a pair of nipples 106 and 108 receiving the pressure fluid through a hose not shown. The nipple 106 is communicated with both expansion portions 104 through a flow path (not shown), and the nipple 108 is placed between both expansion portions 104 and communicated with an opening 110 formed in the shaft portion 102 through a flow path (not shown).

As for such an expanding machine 100, use may be made of a water-sealing machine under the trade name of "PACKER" manufactured by Toa Grout Kogyo Kabushiki Kaisha, which is one of the applicants for the patent in the present invention.

The expanding machine 100 is placed within the base 82 in the condition that the expansion portion 104 is shrunken. Then, the expanding machine 100 is moved to a predetermined position within the first pipe 12 together with the base 82 in the condition that the expansion portion 104 is expanded in the radial direction to such a degree as the base 82 does not displace against the expanding machine 100 by the pressure fluid supplied from a fluid source installed on the ground into the nipple 106 through a hose.

The base 82 and the expanding machine 100 are positioned so that the hole 92 of the base 82 faces to the lower end opening of the cut-off member 70 in the condition that the center of the hole 92 of the base 82 is placed between both expansion portions 104 of the expanding machine 100. In this condition, the pressure fluid is supplied into the nipple 106 of the expanding machine 100, so that the expansion portion 104 is further expanded in the radial direction.

In this manner, the base 82 is expanded in the radial direction to such a degree as both ends of the sheet portion 84 slightly overlap with each other, that is, to such a degree as the male engaging portion 88 is capable of being engaged with either of the female engaging portions 86. As a result, as shown in Fig. 19, the flange portion 74 and the base 82 in the cut-off member 70 are disposed in a recess 112 preliminarily formed on the inner surface of the first pipeline 12. The projections 80 of cut-off member 70 are pressed by the sheet portion 84 against the inner surface of the first pipeline 12 as shown in Fig. 20 and deformed elastically as shown in Fig. 21.

Then, until the male engaging portion 88 is engaged with either of the female engaging portions 86 by restoring force of the projections 80, the pressure fluid within the expansion portion 104 is removed and the base 82 is shrunken. As a result, the projections 80 are maintained to be pressed by the base 82 against the inner surface of the first pipe 12, and the space between the inner surface of the first pipe 12 and the flange portion 74 and the space between the flange portion 74 and the base 82 are maintained in air tightness.

Then, the pressure fluid is supplied into the nipple 108 of the expanding machine 100 in the condition that the cut-off member 70 is maintained to extend within the second pipeline 14, that the end of the hose portion 72 is closed in air tightness, and that the space between the expansion portion 104 and the base 82 is maintained in air tightness.

Since the pressure fluid is supplied into the cut-off member 70 from the opening 110 of the shaft portion 102 in this manner, the cut-off member 70 is expanded in the radial direction so that the hose portion 72 comes into contact with the inner surface of the second pipeline 14.

Then, the cut-off member 70 is hardened in the condition that the cut-off member 70 is expanded. This operation is performed by moving hadening means 114 of Fig. 20 preliminarily placed within the cut-off member 70 in the direction of the hose portion 72 within the cut-off member 70 at least once, while generating heat and light, in particular, ultraviolet light by supplying electric power to the hardening means. The hardening means 114 may be moved within the hose portion 72 by use of a rope.

Then, after the pressure fluid in the expansion portion 104 is removed, the expanding machine 100 is removed. In addition, the end of the cut-off member 70 is opened, the hardening means 114 is removed from here, and the end of the cut-off member 70 is fixed to a manhole.

Since the base 82 is maintained in the condition that the male engaging portion 88 is engaged with either of the female engaging portions 86 by the restoring force of the projections 80 in this manner, the flange portion 74 is maintained to be pressed by the base 82 against the inner surface of the first pipeline 12, and the space between the inner surface of the first pipeline 12 and the flange portion 74 and the space between the flange portion 74 and the base 82 are maintained in air tightness.

As a result, the water leakage from the connection portion is prevented, and the water leakage on the way from the second pipeline 14 is also prevented. As shown in Fig. 19, the flange portion 74 of the cut-off member 70 and the base 82 are disposed in the recess 114 preliminarily formed on the inner surface of the first pipeline 12.

The present invention is suitable to a cut-off member of water used for the connection portion of the pipeline in such a size as any operator is not able to enter, but it may be also applied to a cut-off member of water used for the connection portion of the pipeline in such a size as any operator is able to enter. The present invention may be also applied to the cut-off of water from the connection portions of any pipelines other than sewerage pipelines, for example, any main pipe in the pipeline used for power line or telephone line, that is, the first pipeline and the branch pipe, that is, the second pipeline.

## Claims

1. A method for cutting off water from a portion connecting a first pipeline to a second pipeline branched off from said first pipeline, comprising the steps of:

   disposing an impermeable cut-off member having an expandable hose portion and a flange portion formed integrally with one end of said hose portion in said first and second pipelines so that said flange portion is positioned within said first pipeline and that said hose portion is positioned within said second pipeline; and

   then maintaining said cut-off member so that said flange portion comes into contact with the inner surface of said first pipeline in liquid tightness and that said hose portion extends within said second pipeline.

2. A method for cutting off water according to claim 1, wherein the step of maintaining said cut-off member includes the steps of disposing a sheet-like base wound in a cylindrical form so as to be expandable in the radial direction in said first pipeline, pressing said flange portion by said base against the inner surface of said first pipeline by expanding said base in the radial direction, and bringing said flange portion into contact with the inner surface of said first pipeline in liquid tightness by maintaining said base in the radially expanded condition by engaging a plurality of engaging portions provided on said base with each other.

3. A method for cutting off water according to claim 2, further comprising the step of forming a recess for receiving therein at least said flange portion and said base on the inner surface of said first pipeline, before disposing said cut-off member.

4. A method for cutting off water according to claim 1, wherein the step of maintaining said cut-off member includes the steps of disposing within said first pipeline an elastically deformable sleeve and a sheet-like base disposed within said sleeve in the cylindrically wound condition so as to be expandable in the radial direction, pressing said flange portion by said base and said sleeve against the inner surface of said first pipeline by expanding said base in the radial direction, and bringing said flange portion into contact with the inner surface of said first pipeline in liquid tightness by maintaining said base in the radially expanded condition by engaging a plurality of engaging portions provided on said base with each other.

5. A method for cutting off water according to claim 4, further comprising the step of forming a recess for receiving therein said flange portion, said sleeve and said base on the inner surface of said first pipeline, before disposing said cut-off member.

6. A structure of a portion connecting a first pipeline to a second pipeline branched off from said first pipeline, comprising an impermeable cut-off member having an expandable hose portion and a flange portion formed integrally with one end of said hose portion, said flange portion being brought into contact with the inner surface of said first pipeline in liquid tightness; and

   said hose portion being disposed so as to extend within said second pipeline.

7. A structure of a connection portion in a pipeline according to claim 6, further comprising a sheet-like base disposed within said first pipeline in the cylindrically wound condition so as to be expandable in the radial direction, said base being maintained in the condition that said flange portion is pressed against the inner surface of said first pipeline.

8. A structure of a connection portion in a pipeline according to claim 7, wherein said flange portion and said base are disposed in the recess formed on the inner surface of said first pipeline.

9. A structure of a connection portion in a pipeline according to claim 6, further comprising:

   an elastically deformable sleeve disposed within said first pipeline; and

   a sheet-like base disposed within said sleeve in the cylindrically wound condition so as to be expandable in the radial direction;

   said base being maintained in the condition that said flange portion is pressed against the inner surface of said first pipeline through said sleeve.

10. A structure of a connection portion in a pipeline according to claim 9, wherein said flange portion, said sleeve and said base are disposed in the recess formed on the inner surface of said first pipeline.

11. A cut-off material used for cutting off water from a portion connecting a first pipeline to a second pipeline branched off from said first pipeline, comprising an impermeable cut-off member provided with an expandable hose portion and a flange portion formed integrally with one end of said hose portion.

12. A cut-off material according to claim 11, wherein said flange portion has a plurality of projections formed on at least one of the surface at the side of said hose portion and the surface opposite to said surface.

13. A cut-off material according to claim 12, wherein said projections are annular projections extending continuously around the axis of said hose portion.

14. A cut-off material according to claim 11, further comprising a sheet-like base disposed within said first pipeline in the cylindrically wound condition so as to be expandable in the radial direction and maintaining said flange portion to be pressed against the inner surface of said first pipeline, said base having a plurality of engaging portions engaged with each other to maintain said base in the radially expanded condition when said base is expanded in the radial direction.

15. A cut-off material according to claim 11, further comprising:

an elastically deformable sleeve disposed within said first pipeline; and

a sheet-like base disposed within said sleeve in the cylindrically wound condition so as to be expandable in the radial direction and maintaining said flange portion to be pressed against the inner surface of said first pipeline through said sleeve;

said base having a plurality of engaging portions engaged with each other to maintain said base in the expanded condition when said base is expanded in the radial direction.

16. A cut-off material according to claim 11, wherein said hose portion includes an expandable base material and resin impregnated in said base material and hardened by heat or light, said flange portion is provided with a main portion formed by expanding the end of said hose portion in the radial direction and an elastically deformable auxiliary member attached to said main portion at the side of the hose portion, and said projections are formed integrally with said auxiliary member.

# F I G . 1

# F I G . 2

F I G. 3

# F I G. 4

# F I G. 5

# F I G . 6

# F I G . 7

# F I G. 8

14

46    16    20    12

42    44    24

# F I G. 9

18

14

46    16    12

42    20    24    44

# F I G. 10

# F I G. 11

# F I G. 12

# F I G. 13

# F I G . 14

62
60
60
60
56
60
62

# F I G . 15

72    70    74

# F I G . 16

# F I G . 17

# F I G. 18

# F I G. 19

# F I G . 2O

# F I G . 2 I

# INTERNATIONAL SEARCH REPORT

International Application No PCT/JP91/00171

**I. CLASSIFICATION OF SUBJECT MATTER** (if several classification symbols apply, indicate all) *

According to International Patent Classification (IPC) or to both National Classification and IPC

Int. Cl$^5$   F16L55/10, 55/16, 41/08

**II. FIELDS SEARCHED**

| Minimum Documentation Searched * | |
|---|---|
| Classification System | Classification Symbols |
| IPC | F16L55/10-55/18, 41/08 |

Documentation Searched other than Minimum Documentation
to the Extent that such Documents are Included in the Fields Searched *

| | |
|---|---|
| Jitsuyo Shinan Koho | 1926 - 1990 |
| Kokai Jitsuyo Shinan Koho | 1971 - 1990 |

**III. DOCUMENTS CONSIDERED TO BE RELEVANT** *

| Category * | Citation of Document, [11] with indication, where appropriate, of the relevant passages [12] | Relevant to Claim No. [13] |
|---|---|---|
| Y | JP, A, 63-167193 (Nippon Kokan Koji K.K.), July 11, 1988 (11. 07. 88), Fig. 4 (Family: none) | 1, 4, 6, 9, 11 |
| Y | JP, A, 1-234690 (Iseki Kaihatsu KOki K.K.), September 19, 1989 (19. 09. 89), Figs. 1 to 5 (Family: none) | 1, 6, 11 |
| A | JP, A, 1-234690 (Iseki Kaihatsu Koki K.K.), September 19, 1989 (19. 09. 89), Figs. 1 to 5 (Family: none) | 2-5, 7-10, 12-16 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| April 1, 1991 (01. 04. 91) | April 8, 1991 (08. 04. 91) |
| International Searching Authority | Signature of Authorized Officer |
| Japanese Patent Office | |

Form PCT/ISA/210 (second sheet) (January 1985)